# EUROPEAN PATENT APPLICATION

(11) **EP 1 803 694 A1**
(43) Date of publication of application: **04.07.2007**
(21) Application number: 06380331.6
(22) Date of filing: 22.12.2006
(51) Int. Cl.: C04B 16/06, C04B 18/24, C04B 18/30, C04B 22/04, C04B 26/00, C04B 40/00, C04B 40/02

(54) **Building element composed by non recyclable elements, and a process for manufacturing the same**

(30) Priority: 30.12.2005 CL 349305
(71) Applicant: Jara Marti, Eduardo, Loteo San Joaquin, Puerto Montt (CL)
(72) Inventor: Jara Marti, Eduardo, Loteo San Joaquin, Puerto Montt (CL)
(74) Representative: Gislon, Gabriele

(57) **Abstract**

The building element can take different forms, e.g. paving stone, blocks, floor tiles, coatings, bricks, pallet, panels, platforms, among others, and is composed mainly by non-recyclable waste material, preferably multilayer elements which generally take up space in landfills and dumping grounds. Said non-recyclable materials comprise a combination of any of the elements said that aluminium, paper, polyamide, polyester, polypropylene, cork, paper and even marc or any other inert matter, which are present in a predetermined proportion. The manufacturing process comprises recovering non-recyclable waste materials, sorting and packing them, grinding the packed material into a finely cut material that is melted and extruded to form small noodles, and cutting said noodles to form small pellets which are the base raw material ,to obtain the final building element. The pellets are melted and optionally mixed with dying materials to form a coloured dough to be moulded into the final desired shape.

## Description

The present patent application for invention relates to a building element manufactured from waste materials. Specifically, it relates to a building element that may have the shape of a paving stone, brick, floor tile, slate stone, pallet, panel, platform, etc., which is manufactured from non-recyclable waste materials, i.e., from those materials that only take up space in landfills or dumping grounds in the cities.

### PRIOR ART

Currently, there are different construction material options of construction materials, especially concrete blocks or bricks, manufactured from an agglomeration of cement and a recycled material. The latter are preferably plastic materials, glass and generally every type of monolayer material which, by definition, if they are not used for their own recycling they are used in the aforementioned blocks.

On the other hand, the problem caused by the significant accumulation of non-recyclable multilayer materials in landfills is an environmental threat which have not been solved yet in most cities in the world. When we talk about multilayer materials we are referring to those non-recyclable materials that have more than one component in their composition, e.g., the combination of polyester and polyamide, aluminium and paper, and other compositions that can not be recyclable.

Within the prior art we can mention, patent application 2099-1999 for national invention, abandoned, equivalent to the US Patent 6.329.437 which relates to a material for universal construction used in construction engineering that includes recycled plastic waste materials to manufacture products containing said material and the related method to manufacture it. It is clear that this situation shows us the use of recycled plastic waste which could perfectly have been used in other functions such as its own recycling.

Patent WO 01/14277 publication relates to a concrete block that has recycled glass within its composition. Likewise, Japanese Patent JP 200236240 encompasses a process for manufacturing a light weight material block for its use in civil engineering and construction materials. The use of recycled plastic material from all kind of rough materials, in combination with cement base elements is disclosed in this publication. Finally, it is mentioned in the Canadian Patent CA 2145823 the possibility of manufacturing different types of construction objects in the shape of paving stone or blocks using different types of components such as recycled plastic materials, metals, natural stones, glass and even cork which are appropriately inserted and moulded for manufacturing the construction object.

All the above mentioned patent publications have in common the use of recyclable materials in their structure or formulation composition of construction objects. This means that if these materials are not used for what they have been intended to, they can perfectly be recycled as raw material to be reused and accomplish their original function. In turn, the present invention encompasses the unsolved problem of integrally using in its composition non-recyclable materials without the need to use cement materials or primary binders although they can be used alternatively. For this reason, it is not only possible to obtain a building element made from non-recyclable materials but also to help the environment when using materials that only take up space and pollute the environment.

Another advantage of the present application is the fact that non-recyclable materials which form the building element can come from different places regardless the multilayer composition that form them. In this regard, the building element of the invention can be manufactured from flanges or scrap of plastic materials used in companies that manufacture packaging or wrapping for all sorts of industry, combined with multilayer elements such as aluminium-paper, polyamide, polyester, polyethylene, pvc, etc.

Thus, the building element of the present invention always comprises polyamide, paper and polyethylene, among others, in order to achieve the sufficient structure to be moulded in the desired final shape.

### BRIEF DESCRIPTION OF THE FIGURE

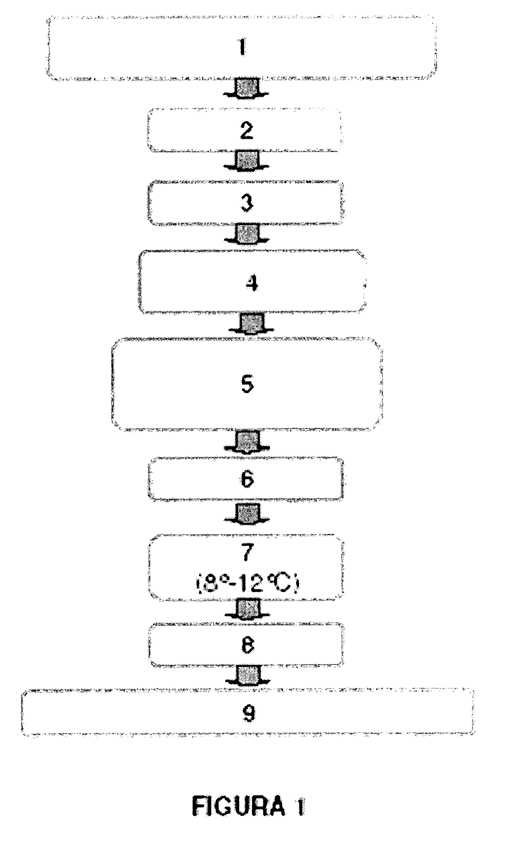

Figure 1: It corresponds to a diagram of the building element manufacturing process of the present invention.

### DETAILED DESCRIPTION OF THE INVENTION

The building element is manufactured with non-recyclable waste materials, preferably multilayer elements comprising aluminium, paper, polyamide, polyester, polypropylene, cork, where obviously in said multilayer material at least two of the aforementioned materials are present, since they would be recyclable elements by themselves. For example, the combination of these materials with plastic material flanges or scrap for packaging, gives a building element the necessary resistance, flexibility and durability.

The manufacturing process starts by recovering the non-recyclable waste material which comes from landfills or factory discharge. The use of nylon, yoghurt containers, adhesive materials, tetra pack type packages, soda cans among others, can be mentioned within the factory discharge. Also, it can be appreciated in the following table which shows different compositions that also marc has been used to originate a building element.

All the above mentioned materials are received at the entrance of the processing plant and are packed (1) having the precaution to calculate the amount present of each type of non-recyclable waste before packing to obtain at the end of the process line the desired building element features to be formulated. Once packed, the material is grinded in grinders to obtain a finely cut material.

After the grinding step (2), the finely cut material undergoes a melting and binding step by extrusion at controlled temperatures so all the materials present can form a perfectly bound base matter (3). The melting and first extrusion temperature ranges from 140 to 250°C.

Regarding temperature, the materials are provided with their melting point common features so that they are proportionally bound. As it has been mentioned, said proportion is determined when the material is delivered at the plant, and undergoes the packing step (1) with the complete composition.

The bound material that is obtained in the described melting step has the shape of small noodles that are cut when the dough starts to chill to form small pellets. These small pellets are the base raw material for obtaining the final building element, and are processed according to the required shape.

Then the pellets are melted (4) and mixed in this step with colouring materials well known in the prior art to give colour to plastic materials, usually called masterbatch. The resulting melted dough, now with the colour already impregnated, undergoes a moulding step (5) where it is given the desired final shape, for example, pallets to carry objects, roof tiles, paving stones, wall coatings, and blocks, among others. Once the final shape is obtained, the building element undergoes a weighing step (6) and then, only after the weight has been verified, the element is cooled (7) at a temperature from 5 to 15° C. After the material is cooled, the possible exceeding material is retouched (8) in order to give a high quality finish to the obtained final element (9).

The exceeding element is reused as raw material at the beginning of the manufacturing process of the building element described herein.

By way of illustration, the building element may have different proportions of the materials that form them. Different combinations that a specific building element may have are shown in table 1 only as an illustrative way. It is understood that the scope of the invention is not limited to other proportions of the final composition of a particular element.

**TABLE 1**

| Raw Material: non-recyclable compound materials (Each component may vary up to 10% and PE may vary up to 20%) | | | | | | | | | | | | | | | | |
|---|---|---|---|---|---|---|---|---|---|---|---|---|---|---|---|---|
| CONSTRUCTION ELEMENT COMPOSITION | | | | | | | | | | | | | | | | |
| | BASE | 1 | 2 | 3 | 4 | 5 | 6 | 8 | 9 | 10 | 11 | 12 | 13 | 14 | 15 | 7 |
| | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| PA ^{*} | 2.9 | 1.8 | 1.6 | 1.5 | 1.5 | 1.7 | 1.5 | 1.7 | 2.0 | 2.4 | 2.1 | 2.2 | 2.6 | 2.3 | 2.7 | 1.4 |
| PE ^{*} | 58.0 | 35.8 | 32.0 | 29.2 | 29.4 | 33.7 | 30.8 | 33.9 | 40.0 | 48.8 | 42.6 | 43.0 | 52.6 | 46.0 | 53.3 | 28.0 |
| PAPER ^{*} | 29.0 | 17.9 | 16.0 | 14.6 | 14.7 | 16.8 | 15.4 | 17.0 | 20.0 | 24.4 | 21.3 | 21.5 | 26.3 | 23.0 | 26.7 | 14.0 |
| OTHERS ^{*} | 10.1 | 6.3 | 5.6 | 5.1 | 5.2 | 5.9 | 5.4 | 5.9 | 7.0 | 8.5 | 7.4 | 7.5 | 9.2 | 8.0 | 9.3 | 4.9 |
| MARC | | 38.3 | 34.3 | 31.3 | 31.5 | 36.1 | 33.0 | 36.4 | | | | | | | | 30.0 |
| AL | | | | 13.2 | 13.2 | | 13.9 | | 18.0 | | 19.1 | 19.4 | | 20.7 | | 12.6 |
| PET | | | 4.8 | | 4.4 | | | 5.1 | 6.0 | 7.3 | | 6.5 | | | 8.0 | 4.2 |
| PP | | | 5.6 | 5.1 | | 5.9 | | | 7.0 | 8.5 | 7.4 | | 9.2 | | | 4.9 |

| | | | | | | | | | | | | | | | | |
|---|---|---|---|---|---|---|---|---|---|---|---|---|---|---|---|---|
| ^{*}Materials present In base formulation PA: Polyamide PE: Polyethylene Al: Aluminium PET: Polyester PP: Polypropylene | | | | | | | | | | | | | | | | |

As it is shown in Table 1, mainly in all kinds of building elements materials such as polyamide, polyester, paper and plastic in general are present because said elements are common in non-recyclable multilayer materials. Additionally, tests have been carried out where alternatively in the final stage, cement elements, small stones and ceramic have been used in the paving stone composition as well as different size gravel to give a different look to a paving stone type element.

All the above information is aimed to represent the invention in a illustrative way, but it will be understood that an average level technician skilled in the art may introduce technically designed equivalent elements in order to accomplish the same function as those previously disclosed within the invention and without altering the solution disclosed herein, and therefore, are intended to fall in the scope of the protection of the present invention.

## Claims

1. Construction element of different forms, e.g. paving stone, blocks, floor tiles, coatings, bricks, pallet, panels, platforms among others, **characterized in that** it is composed mainly by non-recyclable waste material, preferably multilayer elements which generally take up space in landfills and dumping grounds, said non-recyclable materials comprising a combination of any of the elements as aluminium, paper, polyamide, polyester, polypropylene, cork, paper and even marc or any other inert matter which are preferably but not exclusively present in a proportion according to the following table:
| CONSTRUCTION ELEMENT COMPOSITION | | | | | | | | | | | | | | | | |
|---|---|---|---|---|---|---|---|---|---|---|---|---|---|---|---|---|
| | BASE | 1 | 2 | 3 | 4 | 5 | 6 | 8 | 9 | 10 | 11 | 12 | 13 | 14 | 15 | 7 |
| | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| PA ^{*} | 2.9 | 1.8 | 1.6 | 1.5 | 1.5 | 1.7 | 1.5 | 1.7 | 2.0 | 2.4 | 2.1 | 2.2 | 2.6 | 2.3 | 2.7 | 1.4 |
| PE ^{*} | 58.0 | 35.8 | 32.0 | 29.2 | 29.4 | 33.7 | 30.8 | 33.9 | 40.0 | 48.8 | 42.6 | 43.0 | 52.6 | 46.0 | 53.3 | 28.0 |
| PAPER ^{*} | 29.0 | 17.9 | 16.0 | 14.6 | 14.7 | 16.8 | 15.4 | 17.0 | 20.0 | 24.4 | 21.3 | 21.5 | 26.3 | 23.0 | 26.7 | 14.0 |
| OTHERS ^{*} | 10.1 | 6.3 | 5.6 | 5.1 | 5.2 | 5.9 | 5.4 | 5.9 | 7.0 | 8.5 | 7.4 | 7.5 | 9.2 | 8.0 | 9.3 | 4.9 |
| MARC | | 38.3 | 34.3 | 31.3 | 31.5 | 36.1 | 33.0 | 36.4 | | | | | | | | 30.0 |
| AL | | | | 13.2 | 13.2 | | 13.9 | | 18.0 | | 19.1 | 19.4 | | 20.7 | | 12.6 |
| PET | | | 4.8 | | 4.4 | | | 5.1 | 6.0 | 7.3 | | 6.5 | | | 8.0 | 4.2 |
| PP | | | 5.6 | 5.1 | | 5.9 | | | 7.0 | 8.5 | 7.4 | | 9.2 | | | 4.9 |
| | | | | | | | | | | | | | | | | |
|---|---|---|---|---|---|---|---|---|---|---|---|---|---|---|---|---|
| ^{*}Materials present in base formulation | | | | | | | | | | | | | | | | |
wherein:
PA is polyamide, PE is polyethylene, AL is aluminium, PET is polyester and PP is polypropylene, wherein PA, PE, paper and others are the base elements to elaborate the composition of said building element.

2. Construction element of different shapes according to Claim 1 **characterized in that** each of said components present in the building element may vary within the composition around 10% with the exception of polyethylene which may vary around 20%.

3. Construction element of different shapes according to Claim 1, **characterized in that** the composition may contain, alternatively, cement materials.

4. Construction element of different shapes according to Claim 1, **characterized in that** the composition may contain, alternatively, gravel.

5. Construction element of different shapes according to Claim 1, **characterized in that** the composition may contain, alternatively, ceramic.

6. Manufacturing process of a building element of different shapes, e.g., paving stone, blocks, floor tiles, coatings, bricks, pallets, panels among others, **characterized in that** comprises the following stages:
a) recovering non-recyclable waste material from dumping grounds or factory discharge;
b) placing said materials into a plant where they are sorted and packed;
c) grinding the packed material to obtain a finely cut material;
d) said finely cut material undergoes a melting and binding step by extruding the melting material in order to form small noodles;
e) cutting said small noodles to form small pellets which are the base raw material to obtain the final building element;
f) melting said pellets and optionally mixing them with dying materials in order to form a dough with the colour already impregnated; and
g) moulding said dough with the colour already impregnated to give the final desired shape to the building element.

7. A process for manufacturing a building element according to Claim 5, **characterized in that** once said building element is given its final shape is weighed and cooled at a temperature from 5 to 15°C.

8. A process for manufacturing a building element according to Claim 5, **characterized in that** said step d) of melting the grinded material was carried out at a temperature ranging from 140 to 250°C.

9. A process for manufacturing a building element according to Claim 5, **characterized in that** before packing said waste elements, the amount of each element present is calculated in order to pack the final formulation of the construction material.

10. A process for manufacturing a building element according to Claim 6, **characterized in that** once said building element is cooled, it is retouched to remove possible exceeding materials and to give a high quality finish to said element.

11. A process for manufacturing a building element according to Claim 9, **characterized in that** said exceeding material is reused at the beginning of the process.

12. A process for manufacturing a building element according to Claim 5, **characterized in that** said non-recyclable waste materials comprise aluminium, paper, polyamide, polyester, polypropylene, cork, polyethylene and even marc.
